(19) Europäisches Patentamt
European Patent Office
Office européen des brevets

(11) EP 3 070 118 B1

(12) **EUROPEAN PATENT SPECIFICATION**

(45) Date of publication and mention of the grant of the patent:
**26.02.2020 Bulletin 2020/09**

(21) Application number: **14862723.5**

(22) Date of filing: **13.11.2014**

(51) Int Cl.:
***C08J 9/14*** *(2006.01)*

(86) International application number:
**PCT/JP2014/080070**

(87) International publication number:
**WO 2015/072514 (21.05.2015 Gazette 2015/20)**

(54) **EXTRUDED STYRENIC RESIN FOAM AND METHOD FOR MANUFACTURING SAME**

EXTRUDIERTER STYROLHARZSCHAUM UND VERFAHREN ZUR HERSTELLUNG DAVON

MOUSSE DE RÉSINE STYRÉNIQUE EXTRUDÉE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2013 JP 2013235540**

(43) Date of publication of application:
**21.09.2016 Bulletin 2016/38**

(73) Proprietor: **Kaneka Corporation**
**Osaka-shi, Osaka 530-8288 (JP)**

(72) Inventors:
- **KUTSUMIZU Ryuta**
  **Settsu-shi**
  **Osaka 566-0072 (JP)**
- **SHIMIZU Koji**
  **Settsu-shi**
  **Osaka 566-0072 (JP)**

(74) Representative: **Vossius & Partner**
**Patentanwälte Rechtsanwälte mbB**
**Siebertstrasse 3**
**81675 München (DE)**

(56) References cited:
**WO-A1-2007/058736**
**WO-A1-2014/125933**
**JP-A- 2005 330 351**
**JP-A- 2012 512 942**
**JP-A- 2013 514 397**
**JP-A- 2014 118 474**
**JP-A- 2015 004 019**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 070 118 B1

## Description

### Technical Field

The present invention relates to a styrenic resin foam having an excellent appearance and achieving thermal stability and flame retardancy and to a method for manufacturing the same.

### Background Art

A method of continuously manufacturing a styrenic resin foam has been known and includes heat-melting a styrenic resin with an extruder or a similar apparatus, next adding a foaming agent, then cooling the mixture, and extruding the mixture into a low pressure area.

To styrenic resin foams, a flame retardant is added in order to meet the flammability standard of a heat insulating board of an extruded styrene foam in accordance with JIS A9511.

The flame retardant suited for extruded polystyrene foams is required to have a main property of not decomposing at a temperature of around 230°C, which is an extrusion condition of typical styrenic resins. If a flame retardant decomposes in extrusion conditions, a resin deteriorates, and this gives the resulting foam adverse effects such as poor moldability and uncontrollable foam cell diameters.

Another property required for the flame retardant suited for extruded polystyrene foams is efficient decomposition of the flame retardant before the styrenic resin decomposes. Polystyrene is known to decompose from around 300°C. On this account, if containing a flame retardant that does not efficiently decompose at a temperature lower than around 300°C, the foam may fail to meet the flammability standard in accordance with JIS A9511. To achieve a required flame retardancy, a flame retardant is accordingly required to be added in a larger amount, and this is likely to increase the production cost or to cause adverse effects such as poor moldability of a resulting foam.

In such circumstances, hexabromocyclododecane (hereinafter abbreviated as "HBCD") has been widely used as the flame retardant for extruded polystyrene foams. The HBCD is known to be comparatively stable in extrusion conditions but to efficiently decompose when polystyrene decomposes, and can exert high flame retardancy even when added in a small amount.

Unfortunately, the HBCD is a compound that hardly decomposes and may highly accumulate in organisms, and thus is unfavorable in terms of environmental health. There is thus a demand for a reduction in the amount of HBCD used and for the development of alternative flame retardants to the HBCD.

On this account, extruded polystyrene foams containing a bromine flame retardant except the HBCD have been studied.

As alternative flame retardants to the HBCD, polymer flame retardants as described in Patent Document 1 have been developed in place of conventional low-molecular flame retardants.

Among them, a brominated styrene-butadiene block polymer, which is equivalent in flame retardancy to the HBCD, has been drawing attention. The brominated styrene-butadiene block polymer unfortunately has poor thermal stability. Patent Document 2 discloses a technique of using an alkyl phosphite and an epoxy compound as stabilizers to improve the thermal stability of the flame retardant. Meanwhile, the flame retardancy of the flame retardant is known to be incompatible with thermal stability. Patent Document 2 describes no flame retardancy when a stabilizer is used.

As described in Patent Documents 1 and 2, the brominated styrene-butadiene block polymer is not completely compatible with styrenic resin matrices, but forms a certain domain, and thus is supposed to have comparatively low dispersibility in styrenic resins as compared with low-molecular weight compounds such as HBCD. On this account, a flame retardant domain discolored in association with decomposition and deterioration of the flame retardant may result in a poor appearance of a resulting foam. Patent Document 3 discloses final extruded foams containing a brominated styrene-butadiene polymer as a flame retardant agent, and stabilizers.

As described above, the technique of using the brominated styrene-butadiene block polymer as the flame retardant to produce an extruded styrenic foam having thermal stability, flame retardancy, and a good appearance in a balanced manner is still insufficient.

### Citation List

#### Patent Literatures

Patent Document 1: International Publication WO 2007/058736
Patent Document 2: International Publication WO 2010/080285

Patent Document 3: International Publication WO 2014/125933

## Summary of the Invention

### Technical Problem

To solve the above problems of flame retardant extruded polystyrene foams, it is an object of the present invention to provide an extruded polystyrene foam having higher thermal stability, higher flame retardancy, a better appearance, and higher thermal insulation properties and a method for manufacturing the extruded polystyrene foam.

### Solution to the Problem

The inventors of the present invention have intensively studied to solve the problems, and consequently have completed the present invention. That is, the present invention is as defined in the appended claims.

The "styrenic resin" in the present invention is intended not to include the "brominated styrene-butadiene polymers".

### Advantageous Effects of the Invention

The extruded polystyrene foam of the present invention is an extruded polystyrene foam that has higher thermal stability, higher flame retardancy, a better appearance, and higher thermal insulation properties.

### Description of Embodiments

Embodiments of the present invention will next be described. The present embodiments are merely a part of the present invention, and the embodiments can be appropriately changed without departing from the scope of the invention.

The styrenic resin used in the present invention is not limited to particular resins and is exemplified by homopolymers of styrenic monomers such as styrene, methylstyrene, ethylstyrene, isopropylstyrene, dimethylstyrene, bromostyrene, chlorostyrene, vinyltoluene, and vinylxylene and copolymers of two or more of the monomers; and copolymers prepared by copolymerization of the styrenic monomer with at least one additional monomer of divinylbenzene, butadiene, acrylic acid, methacrylic acid, methyl acrylate, methyl methacrylate, acrylonitrile, maleic anhydride, itaconic anhydride, and similar monomers.

The additional monomer to be copolymerized with the styrenic monomer, such as acrylic acid, methacrylic acid, methyl acrylate, methyl methacrylate, maleic anhydride, and itaconic anhydride, can be used in such an amount that a compressive strength and other physical properties of the extruded polystyrene foam to be produced are not impaired.

The styrenic resin used in the present invention is not limited to the homopolymers or the copolymers of the styrenic monomers, and may be a blend of a homopolymer or a copolymer of the styrenic monomers and a homopolymer or a copolymer of the other monomers. A diene rubber reinforced polystyrene or an acrylic rubber reinforced polystyrene may be blended.

The styrenic resin used in the present invention may be a styrenic resin having a branched structure for the purpose of adjusting a melt flow rate (hereinafter abbreviated as "MFR") and a melt viscosity and melt tension at the time of molding, for example.

Among these styrenic resins, for example, styrene homopolymers, styrene-acrylonitrile copolymers, (meth)acrylic acid-copolymerized polystyrene, maleic anhydride-modified polystyrene, and high-impact polystyrene are preferred from the viewpoint of extrusion foam moldability and similar properties. Specifically preferred are styrene homopolymers in terms of cost efficiency.

The styrenic resin used in the present invention is not limited to virgin styrenic resins and may be styrenic resins recycled from styrenic resin foams such as expanded polystyrene (EPS) for fish boxes, cushioning materials for home electric appliances, and expanded polystyrene for food trays or from polystyrene trays as interior materials of refrigerators. Such a material is called recycled styrenic resin 1.

The virgin styrenic resin and the recycled styrenic resin 1 used in the present invention preferably have an MFR of 1 to 15 g/10 min from the viewpoint that moldability is excellent at the time of extrusion foam molding, the discharge rate at the time of molding and the thickness, width, density, or closed cell ratio of a resulting extruded polystyrene foam are easily adjusted to intended values, an extruded polystyrene foam having excellent foamability (as the thickness, width, density, closed cell ratio, surface nature, and other properties of a foam are more easily adjusted, the foamability is better), an excellent appearance, can be produced, and an extruded polystyrene foam having well-balanced properties such as mechanical strengths including compressive strength, bending strength, and bending deflection and toughness

can be produced. The styrenic resin more preferably has an MFR of 4 to 12 g/10 min in order to suppress shear heat generated at the time of melting and kneading in an extruder as much as possible. In the present invention, the MFR is a value determined in accordance with JIS K7210.

In addition to the recycled styrenic resin 1, extruded styrenic foams recycled from cutting scraps generated in a finish cutting step or a similar step of a product and from scraps generated at the time of start-up of extruding can also be used as the material. Such a material is called recycled styrenic resin 2.

The recycled styrenic resin 2 can be placed in an extruder without any treatment, but is preferably subjected to volume reduction so as to be easily placed in an extruder. The method for the volume reduction can be classified on the basis of a processing method and a temperature for the volume reduction into (i) shrinkage and volume reduction with a hot-air drying furnace or a similar apparatus, (ii) volume reduction of pelletization by melting and kneading with a single screw extruder, a twin screw extruder, or a similar apparatus, and (iii) other volume reduction methods. The volume reduction is preferably performed by the volume reduction methods (i) and/or (ii). The processing temperature during the volume reduction is preferably such a temperature that the molecular degradation of a resin as well as effects on a flame retardant are suppressed as much as possible. For example, for the shrinkage and volume reduction with a hot-air drying furnace, the processing temperature is preferably 180°C or less and specifically within a range of 120 to 180°C. For the pelletization by melting and kneading with an extruder or a similar apparatus, the processing temperature is preferably 240°C or less.

For the pelletization, melting and kneading are performed typically with an extruder, and the processing temperature is preferably such a temperature that the molecular degradation of a resin as well as effects on a flame retardant are suppressed as much as possible, for example, about 160 to 240°C. A vent port is preferably provided in order to discharge a foaming agent in cutting scraps.

The present invention is an extruded polystyrene foam produced by performing extrusion-foaming with a styrenic resin, a flame retardant composition, and a foaming agent. The flame retardant composition includes a brominated styrene-butadiene polymer, a stabilizer, and a styrenic resin, the brominated styrene-butadiene polymer is contained in an amount of 30 to 80 wt% where the total weight of the flame retardant composition is 100 wt%, and the flame retardant composition has a TGA 5 wt% reduction temperature of 255 to 270°C.

In the extruded polystyrene foam of the present invention, the brominated styrene-butadiene polymer (hereinafter also called "bromine flame retardant") is used as the flame retardant contained in the flame retardant composition, and thus a foam having excellent flame retardancy and environmental acceptability can be obtained.

Examples of the brominated styrene-butadiene polymer used in the present invention include brominated styrene-butadiene block copolymers, brominated styrene-butadiene random copolymers, brominated styrene-butadiene graft polymers, and brominated, epoxidized styrene-butadiene block copolymers. These polymers may be used singly or in combination of two or more of them. Among them, brominated styrene-butadiene block copolymers are preferred from the viewpoint of performances, cost efficiency, and supply stability.

As such a brominated styrene-butadiene polymer, the polymer described in Patent Document 1 can be used, for example. More specifically, copolymers in which the building block derived from butadiene in a styrene-butadiene copolymer is brominated are usable. Of these copolymers, copolymers in which the building block derived from styrene is not brominated are preferred from the viewpoint of flame retardancy. Such a brominated styrene-butadiene polymer (brominated butadiene-styrene copolymer) in which the building block derived from butadiene is brominated but the building block derived from styrene is not brominated is exemplified by a brominated butadiene-styrene copolymer of CAS No. 1195978-93-8.

The brominated butadiene-styrene copolymer of CAS No. 1195978-93-8 is commercially available, for example, as trade name "EMERALD INNOVATION 3000" from Chemtura and as trade name "FR-122P" from ICL-IP.

In the flame retardant composition in the present invention, the content of the brominated styrene-butadiene polymer is 30 to 80 wt%, in terms of cost efficiency, preferably 40 wt% or more, and even more preferably 50 wt% or more where the total weight of the composition is 100 wt%. If having a low concentration of less than 30 wt%, the flame retardant composition is required to be added in a large amount to the extruded styrenic foam and thus has a disadvantage in cost. If having a content of more than 80 wt%, the flame retardant composition includes the styrenic resin at an extremely small ratio and thus is likely to become brittle, and the production is likely to become difficult. The flame retardant is likely to decompose, and this may lead to a poor appearance of the flame retardant composition, resulting in a poor appearance of the foam.

In the present invention, the flame retardant composition has a TGA 5 wt% reduction temperature of 255 to 270°C and preferably 255 to 265°C. If having a 5 wt% reduction temperature of less than 255°C, the flame retardant decomposes and deteriorates during production of the extruded polystyrene foam, and the cell diameter is difficult to control. In addition, the deterioration of the flame retardant causes a change in color of the flame retardant, and thus foreign substances are likely to be contained in the foam. If having a 5 wt% reduction temperature of more than 270°C, the flame retardant is unlikely to exert the flame retardancy, and thus a large amount of the flame retardant is required to be added in order to ensure the performance, resulting in cost inefficiency. TGA means thermogravimetric analysis,

and the TGA 5 wt% reduction temperature can be determined by the method described later, for example.

In the present invention, in order to control the TGA 5 wt% reduction temperature within a range of 255 to 270°C, at least two or more stabilizers selected from the group consisting of epoxy compounds, phenolic stabilizers, polyhydric alcohol partial esters, and hindered amine stabilizers are contained as the stabilizer. In the present invention, the flame retardant composition includes the stabilizer, which can be separately added when the foam is produced. In such a condition, when the flame retardant composition is prepared, the stabilizer can be used in a minimum amount required to suppress the decomposition of the flame retardant, and the deactivation of the stabilizer can be avoided by the heat during the preparation. When the foam is produced, the separately added stabilizer can exert the function thereof together with the stabilizer in the flame retardant composition. In other words, while the amount of the stabilizer deactivated is suppressed to a minimum extent, the stabilizer is allowed to more effectively exert the function thereof when the flame retardant composition and the foam are prepared. In such a condition, an extruded polystyrene foam having excellent recyclability can be obtained.

From the viewpoint of cost efficiency, performances, and supply stability, the epoxy compound used in the present invention is preferably bisphenol A diglycidyl ether epoxy resins represented by Structural Formula (1):

[C. 1]

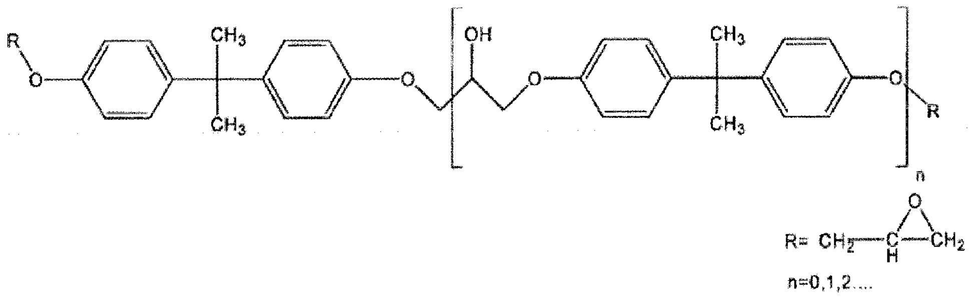

(1)

cresol novolac epoxy resins represented by Structural Formula (2):

[C. 2]

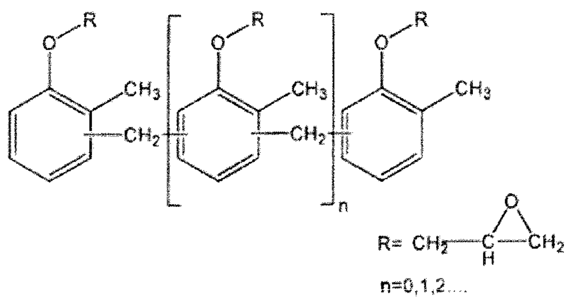

(2)

phenol novolac epoxy resins represented by Structural Formula (3):

[C. 3]

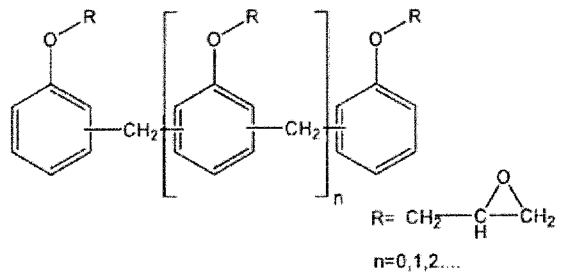

(3)

The above resins represented by Structural Formulas (1) to (3) are preferable for the epoxy compound used in the present invention.

The epoxy compound may be epoxy resins having a bisphenol A skeleton to which bromine atoms are added, represented by Structural Formula (4).

[C. 4]

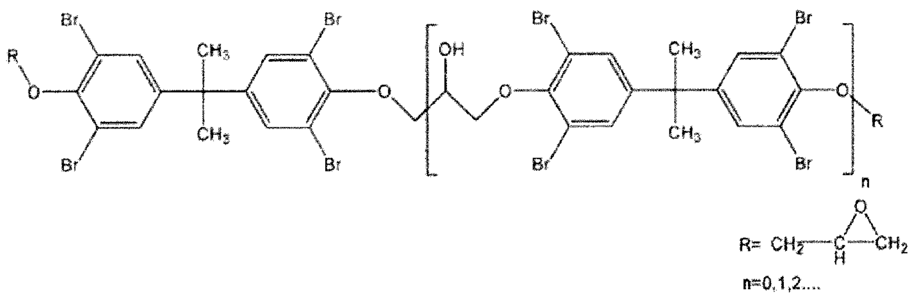

(4)

These epoxy compounds may be used singly or as a mixture of two or more of them.

The epoxy compound used in the present invention preferably has an epoxy equivalent of less than 1,000 g/eq. It is supposed that the epoxy group suppresses the decomposition of the bromine flame retardant and improves the thermal stability of the styrenic resin, and thus an epoxy compound having an epoxy equivalent of 1,000 g/eq or more has an extremely low effect of suppressing the decomposition of the flame retardant. Consequently, such an epoxy compound is required to be added in a large amount and thus is not realistic in terms of cost. From the viewpoint of the balance between cost efficiency and performances, the epoxy equivalent is more preferably less than 500 g/eq and even more preferably less than 400 g/eq.

In the present invention, the content of the epoxy compound is preferably 4 to 20 parts by weight relative to 100 parts by weight of the bromine flame retardant contained in the extruded polystyrene foam. If the content of the epoxy compound is less than 4 parts by weight, the effect of stabilizing the flame retardant is insufficiently provided, and the flame retardant and the resin are likely to decompose to reduce the molecular weight of the resin. Consequently, bubbles constituting the foam have a larger bubble size, and the thermal insulation properties are likely to deteriorate. In addition, the reduction in molecular weight distribution is likely to cause the foam surface to have poor smoothness and to deteriorate the moldability. The decomposition of the flame retardant causes other additives or the resin to turn black, resulting in a poor appearance. If the content of the epoxy compound is more than 20 parts by weight, the stabilizer excessively exerts the stabilization effect, thus the flame retardant cannot effectively decompose in case of burning of a foam, and the flame retardancy is likely to be lowered.

As the epoxy compound is contained in a larger amount, the TGA 5 wt% reduction temperature of the flame retardant composition is likely to be shifted to the high temperature side. Depending on a combination with another stabilizer used in combination, the flame retardant composition may fail to have a TGA 5 wt% reduction temperature of 255 to 270°C if the content is out of the range (4 to 20 parts by weight relative to 100 parts by weight of the bromine flame retardant contained in the extruded polystyrene foam), and consequently the foam may have lower performances.

The polyhydric alcohol partial ester used in the present invention is a mixture of partial esters that are reaction products of a polyhydric alcohol such as pentaerythritol, dipentaerythritol, and tripentaerythritol with a monovalent carboxylic acid such as acetic acid and propionic acid or a divalent carboxylic acid such as adipic acid and glutamic acid and are compounds having one or more hydroxy groups in the molecule thereof, and may contain a material polyhydric alcohol in a small amount.

Specific examples of the polyhydric alcohol partial ester include Plenlizer ST-210 and Plenlizer ST-220 manufactured by Ajinomoto Fine-Techno Co., Inc., which are reaction products of a polyhydric alcohol with a partial ester of dipentaerythritol and adipic acid.

In the present invention, the content of the polyhydric alcohol partial ester is preferably 0 to 20 parts by weight relative to 100 parts by weight of the bromine flame retardant contained in the extruded polystyrene foam. If the content of the polyhydric alcohol partial ester is more than 20 parts by weight, the stabilization effect may be excessively exerted to lower the flame retardancy by the flame retardant itself.

As the polyhydric alcohol partial ester is contained in a larger amount, the TGA 5 wt% reduction temperature of the flame retardant composition is likely to be shifted to the high temperature side. Depending on a combination with another stabilizer used, the flame retardant composition may have a TGA 5 wt% reduction temperature of more than 270°C if the content is out of the range (0 to 20 parts by weight relative to 100 parts by weight of the bromine flame retardant contained in the extruded polystyrene foam), and consequently the foam may have lower flame retardancy.

The phenolic stabilizer used in the present invention is not limited to particular substances, and commercially available substances can be used. Specific examples of the phenolic stabilizer include triethylene glycol-bis-3-(3-t-butyl-4-hydroxy-5-methylphenyl)propionate, pentaerythritol tetrakis[3-(3',5'-di-tert-butyl-4'-hydroxyphenyl)propionate], and octadecyl 3-(3,5-di-tert-butyl-4-hydroxyphenyl)propionate. These compounds may be used singly or in combination of two or more of them. Among them, pentaerythritol tetrakis[3-(3',5'-di-tert-butyl-4'-hydroxyphenyl)propionate] is preferably used in terms of price and performances.

In the present invention, the content of the phenolic stabilizer is preferably 4 parts by weight to 20 parts by weight relative to 100 parts by weight of the bromine flame retardant contained in the extruded polystyrene foam. If the content of the phenolic stabilizer is more than 20 parts by weight, the bubble formation in the foam is affected, and the moldability and the thermal insulation properties are likely to be difficult to control. If the content of the phenolic stabilizer is less than 4 parts by weight, the effect of stabilizing the flame retardant may be insufficiently exerted.

As the phenolic stabilizer is contained in a larger amount, the TGA 5 wt% reduction temperature of the flame retardant composition is likely to be shifted to the high temperature side. Depending on a combination with another stabilizer used in combination, the flame retardant composition may have a TGA 5 wt% reduction temperature of more than 270°C if the content is out of the range (4 to 20 parts by weight relative to 100 parts by weight of the bromine flame retardant contained in the extruded polystyrene foam), and consequently the foam may have lower performances.

The phosphite stabilizer in the present disclosure is preferably exemplified by
3,9-bis(2,4-di-tert-butylphenoxy)-2,4,8,10-tetraoxa-3,9-diphosphaspiro[5.5]u ndecane,
3,9-bis(2,6-di-tert-butyl-4-methylphenoxy)-2,4,8,10-tetraoxa-3,9-diphosphas piro[5.5]undecane, and
tetrakis(2,4-di-tert-butyl-5-methylphenyl)-4,4'-biphenylene diphosphonite) from the viewpoint that such a compound does not reduce the flame retardancy of the foam but can improve the thermal stability of the foam.

In the present disclosure, the content of the phosphite stabilizer is preferably 2.0 parts by weight or less and more preferably 0.9 parts by weight or less relative to 100 parts by weight of the bromine flame retardant contained in the extruded polystyrene foam. If the content of the phosphite stabilizer is more than 2.0 parts by weight, the stabilization effect may be excessively exerted to lower the flame retardancy by the flame retardant itself.

As the phosphite stabilizer is contained in a larger amount, the TGA 5 wt% reduction temperature of the flame retardant composition is likely to be shifted to the high temperature side. Depending on a combination with another stabilizer used in combination, the flame retardant composition may have a 5 wt% reduction temperature of more than 270°C if the content is out of the range (2.0 parts by weight or less relative to 100 parts by weight of the bromine flame retardant contained in the extruded polystyrene foam), and consequently the foam may have lower flame retardancy.

The hindered amine stabilizer used in the present invention is preferably exemplified by bis(2,2,6,6-tetramethyl-4-piperidinyl) decanedioate, bis(1,2,2,6,6-pentamethyl-4-piperidinyl) decanedioate, bis[2,2,6,6.tetramethyl-1-(octyloxy)-4-piperidinyl] decanedioate, and tetrakis(2,2,6,6-tetramethyl-4- piperidyl)-1,2,3,4-butane tetracarboxylate from the viewpoint that such a compound does not reduce the flame retardancy of the foam but can improve the thermal stability of the foam.

In the present invention, the content of the hindered amine stabilizer is preferably 20 parts by weight or less relative to 100 parts by weight of the bromine flame retardant contained in the extruded polystyrene foam. As the hindered amine stabilizer is contained in a larger amount, the TGA 5 wt% reduction temperature of the flame retardant composition is likely to be shifted to the high temperature side. Depending on a combination with another stabilizer used, the flame retardant composition may have a TGA 5 wt% reduction temperature of more than 270°C if the content is out of the range (20 parts by weight relative to 100 parts by weight of the bromine flame retardant contained in the extruded polystyrene foam), and consequently the foam may have lower performances.

As for the production method, the flame retardant composition of the present invention is produced with a known kneader. For example, a brominated styrene-butadiene polymer, a stabilizer, and a styrenic resin are mixed, melted, and kneaded with a unidirectional twin-screw extruder, and molded with a die. The processing temperature is preferably 200°C or less. The mixture is melted and kneaded at a cylinder preset temperature of 180°C or less and even more

preferably 160°C or less. The resin temperature at a die outlet is preferably 215°C or less and more preferably 200°C or less. In the production process, in order to suppress shear heat as much as possible and not to induce the deterioration of a resin and a brominated styrene-butadiene polymer as the flame retardant, the screw preferably has such a design that the shear heat becomes small.

In the present invention, as the technique of adding the flame retardant to the extruded polystyrene foam, a flame retardant composition in which the flame retardant is melted and kneaded with a stabilizer and a styrenic resin in advance is added as described above. At that time, the content of the brominated styrene-butadiene polymer as the flame retardant in the extruded polystyrene foam is preferably 0.5 to 10 parts by weight relative to 100 parts by weight of the total polystyrene resins in the extruded polystyrene foam. In consideration of cost efficiency and effect on other required physical properties, the content is more preferably 0.5 to 6 parts by weight. The amount of the flame retardant composition added can be appropriately set so as to give the above content.

In the present invention, combination use of a radical generator enables an improvement in flame retardancy of the extruded polystyrene foam.

Examples of the radical generator used in the present invention include 2,3-dimethyl-2,3-diphenylbutane, poly-1,4-diisopropylbenzene, 2,3-diethyl-2,3-diphenylbutane, 3,4-dimethyl-3,4-diphenylhexane, 3,4-diethyl-3,4-diphenylhexane, 2,4-diphenyl-4-methyl-1-pentene, and 2,4-diphenyl-4-ethyl-1-pentene, and also include peroxides such as dicumyl peroxide.

Among them, compounds stable in resin processing temperature conditions are preferred, and 2,3-dimethyl-2,3-diphenylbutane and poly-1,4-diisopropylbenzene are specifically preferred.

In the present invention, the content of the radical generator is preferably 0.05 to 0.5 parts by weight relative to 100 parts by weight of all the styrenic resins in the extruded polystyrene foam.

In the present invention, for the purpose of further improving the flame retardancy, a phosphorus flame retardant auxiliary such as phosphoric acid esters and phosphine oxides can be used in combination to such an extent that the thermal stability is not impaired.

Examples of the phosphoric acid ester used in the present invention include triphenyl phosphate, tricresyl phosphate, trixylylenyl phosphate, cresyl diphenyl phosphate, 2-ethylhexyl diphenyl phosphate, trimethyl phosphate, triethyl phosphate, tributyl phosphate, tris(2-ethylhexyl) phosphate, tris(butoxyethyl) phosphate, condensed phosphoric acid esters, and halogen-containing phosphoric acid esters such as tris(tribromoneopentyl) phosphate. Specifically preferred are triphenyl phosphate and tris(tribromoneopentyl) phosphate.

The phosphine oxide used in the present invention is preferably triphenylphosphine oxide.

These phosphoric acid esters and phosphine oxides may be used singly or in combination of two or more of them.

In the present invention, the content of the phosphoric flame retardant auxiliary is preferably 2 parts by weight or less relative to 100 parts by weight of all the styrenic resins in the extruded polystyrene foam.

The foaming agent used in the present invention is not limited to particular agents, but use of a saturated hydrocarbon having a carbon atom number of 3 to 5 can impart excellent environmental acceptability.

Examples of the saturated hydrocarbon having a carbon atom number of 3 to 5 used in the present invention include propane, n-butane, i-butane, n-pentane, i-pentane, and neopentane. These saturated hydrocarbons may be used singly or in combination of two or more of them. Among these saturated hydrocarbons having a carbon atom number of 3 to 5, propane, n-butane, i-butane, and mixtures of two or more of them are preferred from the viewpoint of foamability. From the viewpoint of thermal insulation properties of the foam, n-butane, i-butane, and mixtures thereof are preferred, and i-butane is particularly preferred.

From the viewpoint of an improvement in thermal conductivity of the foam, i-butane is preferably contained in an amount of 2.5 to 4.0 parts by weight relative to 100 parts by weight of all the styrenic resins in the extruded polystyrene foam. However, by adding a large amount of i-butane, which is a combustible gas, the flame retardancy of the foam is likely to deteriorate. In order to keep the balance between thermal conductivity and flame retardancy, the content is preferably 2.7 to 3.7 parts by weight relative to 100 parts by weight of all the styrenic resins in the extruded polystyrene foam.

In the present invention, use of an additional foaming agent other than the saturated hydrocarbons having a carbon atom number of 3 to 5 provides a plasticization effect and an assistant foaming effect during production of the foam and reduces the extrusion pressure, enabling stable production of the foam.

Examples of the additional foaming agent used in the present invention include organic foaming agents including ethers such as dimethyl ether, diethyl ether, methyl ethyl ether, isopropyl ether, n-butyl ether, diisopropyl ether, furan, furfural, 2-methylfuran, tetrahydrofuran, and tetrahydropyran; ketones such as dimethyl ketone, methyl ethyl ketone, diethyl ketone, methyl n-propyl ketone, methyl n-butyl ketone, methyl i-butyl ketone, methyl n-amyl ketone, methyl n-hexyl ketone, ethyl n-propyl ketone, and ethyl n-butyl ketone; saturated alcohols having a carbon atom number of 1 to 4, such as methanol, ethanol, propyl alcohol, i-propyl alcohol, butyl alcohol, i-butyl alcohol, and t-butyl alcohol; carboxylic acid esters such as methyl formate, ethyl formate, propyl formate, butyl formate, amyl formate, methyl propionate, and ethyl propionate; halogenated alkyls such as methyl chloride and ethyl chloride; and trans-1,3,3,3-tetrafluoroprop-1-ene;

inorganic foaming agents including water, carbon dioxide, and nitrogen; and chemical foaming agents including azo compounds and tetrazole. These additional foaming agents may be used singly or as a mixture of two or more of them.

Among these additional foaming agents, for example, saturated alcohols having a carbon atom number of 1 to 4, dimethyl ether, diethyl ether, methyl ethyl ether, methyl chloride, and ethyl chloride are preferred from the viewpoint of foamability, foam moldability. From the viewpoint of the combustibility of the foaming agents, the flame retardancy of the foam, the thermal insulation properties described later, water, carbon dioxide, and nitrogen are preferred. From the viewpoint of a plasticization effect, dimethyl ether is particularly preferred, and from the viewpoint of cost efficiency and an improvement effect of the thermal insulation properties by the control of bubble diameters, water is particularly preferred.

From the above viewpoint, in the present invention, at least one additional foaming agent selected from the group consisting of water, carbon dioxide, nitrogen, alcohols having a carbon number of 1 to 4, dimethyl ether, methyl chloride, and ethyl chloride is preferably contained as the foaming agent in addition to the saturated hydrocarbon having a carbon atom number of 3 to 5.

In the present invention, the amount of the foaming agent (the total amount of the above-mentioned saturated hydrocarbon and the additional foaming agent) is preferably 2 to 20 parts by weight and more preferably 4 to 10 parts by weight relative to 100 parts by weight of all the styrenic resins in the extruded polystyrene foam (100 parts by weight of the total amount of the styrenic resins contained in the extruded polystyrene foam in the present invention; the same is applied hereinafter). If contained in an amount of less than 4 parts by weight, the foaming agent provides a small expansion ratio, and thus a resulting resin foam may be difficult to exert the performance such as lightweight and a heat-insulating performance. If contained in an amount of more than 20 parts by weight, the foaming agent is excessively contained, and thus a resulting foam may have voids and other defects.

In the present invention, use of water as the additional foaming agent enables the production of an extruded polystyrene foam having a characteristic bubble structure in which comparatively small bubbles (hereinafter called small bubbles) having a bubble diameter of about 0.2 mm or less and comparatively large bubbles (hereinafter called large bubbles) having a bubble diameter of about 0.25 to 1 mm are present in a sea-island manner in the foam, and this allows the resulting foam to have higher thermal insulation properties.

In the foam having a particular bubble structure in which the small bubbles having a bubble diameter of 0.2 mm or less and large bubbles having a bubble diameter of 0.25 to 1 mm are mixed, the ratio of area occupied by the small bubbles (occupying area ratio of small bubbles per unit cross-sectional area, hereinafter called "small bubble occupying area ratio") in a cross-sectional area of the foam is preferably 5 to 95%, more preferably 10 to 90%, even more preferably 20 to 80%, and particularly preferably 25 to 70%.

In the present invention, when water is used as the additional foaming agent, a water-absorbing substance is preferably added for stable extrusion foam molding. Specific examples of the water-absorbing substance used in the present invention include water absorbing polymers such as hydroxyethyl cellulose, polyacrylate polymers, starch-acrylic acid graft copolymers, polyvinyl alcohol polymers, vinyl alcohol-aery late copolymers, ethylene-vinyl alcohol copolymers, acrylonitrile-methyl methacrylate-butadiene copolymers, polyethylene oxide copolymers, and derivatives thereof; water absorbable or water swellable layered silicates and organized products thereof, including fine particles having a particle size of 1,000 nm or less and having a hydroxy group on the surface, such as anhydrous silica (silicon dioxide) having a silanol group on the surface [for example, AEROSIL manufactured by Nippon Aerosil Co., Ltd. is commercially available], smectite, and swellable fluorine mica; and porous substances such as zeolite, active carbon, alumina, silica gel, porous glass, activated clay, and diatomaceous earth.

In the present invention, the amount of the water-absorbing substance is appropriately adjusted in accordance with the amount of water added and is preferably 0.01 to 5 parts by weight and more preferably 0.1 to 3 parts by weight relative to 100 parts by weight of all the styrenic resins in the extruded polystyrene foam.

In the present invention, for the purpose of improving the thermal insulation properties of the foam, a heat ray radiation suppressor can be added to yield a foam having high thermal insulation properties. Here, the heat ray radiation suppressor is a substance having characteristics of reflecting, scattering, or absorbing light in a near-infrared or infrared region (for example, in a wavelength region of about 800 to 3,000 nm).

In the present invention, examples of the heat ray radiation suppressor include graphite, carbon black, aluminum paste, titanium oxide, and barium sulfate. These heat ray radiation suppressors may be used singly or in combination of two or more of them. Among these heat ray radiation suppressors, graphite, carbon black, and aluminum paste are preferred, and graphite is specifically preferred, from the viewpoint of the effect of suppressing heat ray radiation.

In the present invention, process aids such as fatty acid metal salts, fatty acid amides, fatty acid esters, liquid paraffin, and olefinic waxes and additives such as flame retardants other than the above-mentioned flame retardants, flame retardant auxiliaries, antioxidants, antistatic agents, and coloring agents including pigments can be added, as necessary, to such an extent that the effect of the invention is not impaired.

A method for producing an extruded polystyrene foam is performed by supplying a styrenic resin, a flame retardant composition, additives, to a heat-melting means such as an extruder, adding a foaming agent to the styrenic

resin at any step in high pressure conditions to prepare a flowable gel, cooling the gel to a temperature suitable for extrusion-foaming, and performing the extrusion-foaming the flowable gel through a die into a low-pressure region, thereby forming a foam. Steps before addition of the foaming agent will be described in detail. A mixture prepared, for example, by dry blending a styrenic resin, a flame retardant composition, and additives used as necessary (a stabilizer, a radical generator, a phosphoric acid ester, a phosphine oxide, a water-absorbing substance, a heat ray radiation suppressor, and various other additives) is supplied to an extruder and heated, melted, and kneaded. At an intended position of the extruder, a foaming agent is added to the kneaded material and is pressed into the styrenic resin.

In the present invention, by preparing a particular flame retardant composition in advance and using the composition, a styrenic resin, and a foaming agent to form a foam in this manner, a foam having excellent thermal stability, excellent flame retardancy, and an excellent appearance can be provided.

When the styrenic resin, the flame retardant composition, and additives used as necessary are supplied to a heat-melting means, the above-mentioned stabilizer may be further added. This enables production of an extruded polystyrene foam having excellent recyclability.

The heating temperature, the melting and kneading time, and the melting and kneading means for heat-melting and kneading the styrenic resin, the flame retardant composition, the foaming agent, and additives used as necessary are not limited to particular values or means. The heating temperature may be any temperature higher than a melting temperature of a styrenic resin to be used, but is preferably such a temperature that the molecular degradation of a resin as well as effects on the brominated styrene-butadiene polymer as the flame retardant are suppressed as much as possible, for example, about 160 to 240°C, and more preferably 225°C or less. The melting and kneading time varies with extrusion output per unit time, melting and kneading means, and thus is not unequivocally set, but a time required for uniform dispersion and mixing of the styrenic resin and the foaming agent is appropriately selected. Examples of the melting and kneading means include a screw extruder, and a means used for common extrusion-foaming can be used without any limitation.

The foam molding method is not limited to particular methods, and may be, for example, a common method in which a foam obtained by pressure-release from a slit die is molded with, for example, a mold and a molding roll disposed in close contact with or in contact with the slit die to form a plate-like foam having a large cross-sectional area.

The extruded polystyrene foam of the present invention may have any thickness, which is appropriately set depending on an application. For example, for a heat insulating material used for construction materials and similar applications, the foam preferably has a certain thickness as with common plate-like materials in order to obtain preferred thermal insulation properties, bending strength, and compressive strength, and the thickness is commonly 10 to 150 mm and preferably 20 to 100 mm.

The extruded polystyrene foam of the present invention preferably has a density of 15 to 50 $kg/m^3$ and more preferably 25 to 40 $kg/m^3$ in order to obtain lightweight properties, excellent thermal insulation properties, bending strength, and compressive strength.

The extruded polystyrene foam of the present invention is preferably used as heat insulating materials for construction materials from the viewpoint of excellent thermal stability, flame retardancy, and thermal insulation properties.

The extruded polystyrene foam of the present invention preferably passes the burning test in accordance with JIS A9511 from the viewpoint of flame resistance properties.

The extruded polystyrene foam of the present invention preferably has an oxygen index of 26% or more from the viewpoint of flame resistance properties.

Examples

Next, the method for producing the extruded thermoplastic resin foam of the present invention will be described in further detail with reference to examples, but the present invention is not limited to the examples. Unless otherwise specified, "part" represents part by weight, and "%" represents % by weight.

Materials used in Examples and Comparative Examples are as shown below.

(A) Styrenic resin [manufactured by PS Japan Corporation, 680]

(B) Flame retardant

- A brominated styrene-butadiene block polymer [manufactured by Chemtura, EMERALD INNOVATION 3000, a bromine content of 65 wt%]

(C) Epoxy compound

- A bisphenol-A-glycidyl ether [manufactured by Adeka Corporation, EP-13, an epoxy equivalent of 180 to 200

g/eq.]

- A cresol novolac epoxy resin [manufactured by Huntsman Japan, ECN-1280, an epoxy equivalent of 212 to 233 g/eq.]

(D) Polyhydric alcohol partial ester

- A reaction mixture of dipentaerythritol and adipic acid [manufactured by Ajinomoto Fine-Techno Co., Inc., Plenlizer ST 210]

(E) Phenolic stabilizer

- Pentaerythritol tetrakis[3-(3',5'-di-tert-butyl-4'-hydroxyphenyl)propionate] [manufactured by Chemtura, ANOX 20]

(F) Phosphite stabilizer 3,9-Bis(2,4-di-tert-butylphenoxy)-2,4,8,10-tetraoxa-3,9-diphosphaspiro[5.5]u ndecane [manufactured by Chemtura, Ultranox 626]
(G) Radical generator

- Poly-1,4-diisopropylbenzene [manufactured by UNITED INITIATORS, CCPIB]

(H) Phosphorus flame retardant

- Triphenylphosphine oxide [Sumitomo Shoji Chemicals Co., Ltd.]

(I) Foaming agent

- Isobutane [manufactured by Mitsui Chemicals, Inc.]
- Butane for industrial use [manufactured by Iwatani Corporation]
- Water [tap water]
- Dimethyl ether [manufactured by Mitsui Chemicals, Inc.]

(J) Additional additive

- Talc [manufactured by Hayashi-Kasei Co., Ltd., Talcan Powder PK-Z]
- Bentonite [manufactured by HOJUN Co., Ltd., Ben-Gel Brite 11K]
- Silica [manufactured by Evonik Degussa Japan Co., Ltd., Carplex BS304F]

Evaluations in Examples and Comparative Examples were performed by the following methods.

(1) Bromine content in flame retardant composition

A bromine flame retardant was decomposed by the oxygen flask combustion method, and then the Br content was determined by ion chromatography.

(2) 5 wt% Reduction temperature of flame retardant composition by TGA

Sample weight: 7 mg
Measurement apparatus: TG-DTG 60A (manufactured by Shimadzu Corporation)
Measurement cell: aluminum
Measurement atmosphere: nitrogen (20 ml/min)
Temperature conditions: heating at a temperature increase rate of 10°C/min from room temperature (about 25°C) to 400°C
5 wt% Reduction temperature: the temperature at which the weight of a sample was reduced by 5% based on the mass of the sample at 150°C

(3) Appearance test of flame retardant composition

Such a flame retardant composition that no color change including black lines or black dots was observed in

a pellet of the composition was evaluated as pass.

(4) Shape of flame retardant composition

A flame retardant composition that was able to be cut into a cylindrical shape by strand cutting was evaluated as pass.

(5) Foam density

The foam density was calculated in accordance with the equation, foam density (g/$cm^3$) = foam weight (g)/foam volume ($cm^3$), and the unit was converted into kg/$m^3$ to show the result.

(6) JIS combustibility

An obtained sample was allowed to stand in a room, and on day 7 after the production, the foam was subjected to measurement in accordance with JIS A9511.
○: The following requirements are satisfied: a flame disappears within 3 seconds; no afterglow; and burning does not exceed the combustion limit indication line.
×: The above requirements are not satisfied.

(7) Oxygen index

The oxygen index of a foam was determined by the method in accordance with JIS K 7201: 1999.

(8) Small bubble area ratio

For an extruded foam, the occupying area ratio of bubbles having a bubble diameter of 0.2 mm or less in a foam cross-sectional area was determined by the following procedure. Here, the bubble having a bubble diameter of 0.2 mm or less is a bubble having a circle equivalent diameter of 0.2 mm or less.

a) A vertical cross-section of a foam is photographed under a scanning electron microscope [manufactured by Hitachi, Ltd., product number: S-450] at a magnification of 30.
b) On the photograph, an OHP sheet is placed, and sections corresponding to bubbles having a diameter of larger than 7.5 mm in thickness direction (corresponding to bubbles larger than 0.2 mm in the actual dimension) are painted with a black ink and copied to the sheet (primary treatment).
c) The primary treated image is imported into an image processor [(manufactured by PIAS, product number: PIAS-II], and deep color sections and light color sections are identified, or whether sections are painted with the black ink is identified.
d) Of the deep color sections, sections having areas corresponding to a circle having a diameter of 7.5 mm or less, or sections having large dimensions in the thickness direction but having areas corresponding to a circle having a diameter of 7.5 mm or less are turned into light color, thereby correcting the deep color sections.
e) By using "FRACTAREA (area ratio)" of the image processing function, the area ratio of bubbles having a bubble diameter of 7.5 mm or less (the light color sections of the sections indicated by the deep color and the light color) in the whole image is calculated in accordance with the following equation.

$$\text{Small bubble occupying area ratio (\%)} = (1 - \text{area of deep color sections/area of whole image}) \times 100$$

(9) Bubble diameter

The bubble diameter of an obtained extruded polystyrene foam was determined by the method in accordance with ASTM D 3567.

(10) Thermal conductivity

On day 7 after the production of a foam, the thermal conductivity of the extruded polystyrene foam was determined in accordance with JIS A9511.

(11) Generation rate of black dots

A single surface of an extruded foam plate with a width of 910 mm and a length of 1,820 mm was visually observed (n = 100 samples). When at least one black dot was visually observed, the sample was regarded as failure. The generation rate was evaluated based on the following criteria.
○: The number of failure samples is less than 2.
Δ: The number of failure samples is not less than 2 and less than 5.
×: The number of failure samples is 5 or more.

[Preparation of flame retardant composition]

(Example 1)

In advance, 42.25 wt% of styrenic resin (polystyrene 680), 50 wt% of brominated SBS block polymer (EMERALD INNOVATION 3000) as the flame retardant, and, as the stabilizers, 2.5 wt% of cresol novolac epoxy resin (ARALDITE ECN-1280) as an epoxy compound, 5.0 wt% of pentaerythritol tetrakis[3-(3',5'-di-tert-butyl-4'-hydroxyphenyl)propionate] (ANOX 20) as a phenolic stabilizer, and 0.25 wt% of 3,9-bis(2,4-di-tert-butylphenoxy)-2,4,8,10-tetraoxa-3,9-diphosphaspiro[5.5]u ndecane (Ultranox 626) as a phosphite stabilizer were dry blended where the total weight of a flame retardant composition was 100 wt%. Then, the mixture was supplied to a unidirectional twin-screw extruder with a bore of 46 mm and L/D = about 30 at a cylinder preset temperature of 150°C at a discharge rate of 50 kg/hr to prepare a flame retardant composition by strand cutting. The resin temperature was 190°C at the die outlet.

(Examples 2 to 4, Comparative Examples 1 to 4)

Flame retardant compositions were obtained by the same operation as in Example 1 except that the ratio of the flame retardant and the type and amount of the stabilizer were changed as shown in Table 1. The properties of the obtained flame retardant compositions are shown in Table 1.

[Table 1]

| Examples and Comparative Examples of flame retardant composition | | | | Example 1 | Example 2 | Example 3 | Example 4 | Comparative Example 1 | Comparative Example 2 | Comparative Example 3 | Comparative Example 4 |
|---|---|---|---|---|---|---|---|---|---|---|---|
| Production conditions | Styrenic resin | 680 | wt % | 42.25 | 54.3 | 30.2 | 38.9 | 48.75 | 43.75 | 42.5 | 2.25 |
| | Flame retardant | EMERALD INNOVATION 3000 | wt % | 50 | 38.4 | 61.5 | 50 | 50 | 50 | 50 | 85 |
| | Stabilizer | ECN-1280 | wt % | 2.5 | 3.20 | 1.8 | 2.5 | 1.25 | 1.25 | 5 | 4.25 |
| | | ANOX20 | wt % | 5 | 3.84 | 6.15 | 5 | 0 | 5 | 2.5 | 8.5 |
| | | Ultranox 626 | wt % | 0.25 | 0.19 | 0.31 | 0.25 | 0 | 0 | 2.5 | 0.425 |
| | | Plenlizer ST-210 | wt % | 0 | 0 | 0 | 3.35 | 0 | 0 | 0 | 0 |
| | Theoretical bromine content | | wt % | 32.5 | 25.0 | 40.0 | 32.5 | 32.5 | 32.5 | 32.5 | 55.3 |
| Physical properties | Bromine content | | wt % | 32.4 | 24.7 | 40.2 | 31.0 | 31.0 | 32.0 | 31.0 | 55.0 |
| | 5 wt% Reduction temperature | | °C | 262 | 265 | 258 | 267 | 252 | 253 | 273 | 260 |
| | Appearance (color change) | | — | ○ | ○ | ○ | ○ | × | × | ○ | × |
| | Appearance (pellet shape) | | — | ○ | ○ | ○ | ○ | × | × | ○ | × |

[Production of extruded foam]

(Example A)

To 100 parts of styrenic resin (including the styrenic resin in the flame retardant composition), 6.0 parts by weight of flame retardant composition obtained in Example 1 (adjusted so as to correspond to 3.0 parts by weight of flame retardant), 0.15 parts of bisphenol A glycidyl ether (EP-13), 0.2 parts of polyhydric alcohol partial ester (Plenlizer ST 210), 0.1 parts of poly-1,4-diisopropylbenzene as the radical generator, 0.1 parts of calcium stearate, 0.5 parts of talc, 0.5 parts of bentonite, and 0.2 parts of silica were dry blended to give a resin mixture.

Next, the mixture was supplied at about 800 kg/hr to an extruder in which a single screw extruder with a bore of 150 mm (first extruder), a single screw extruder with a bore of 200 mm (second extruder), and a cooler were connected in series.

The resin mixture supplied to the first extruder was heated at a resin temperature of 225°C, melted or plasticized, and kneaded, and then a foaming agent (0.7 parts by weight of water (tap water), 3.5 parts by weight of isobutane, and 2 parts by weight of dimethyl ether relative to 100 parts by weight of the styrenic resin) was pressed into the resin close to the end of the first extruder. Next, the resin was cooled to a resin temperature of 120°C in the second extruder connected to the first extruder and in the cooler, and was extrusion-foamed through a mouthpiece having a rectangular section with a thickness of 2 mm and a width of 400 mm provided at the end of the cooler into the atmosphere. The extruded foam was processed with a mold disposed in close contact with the mouthpiece and with molding rolls disposed at downstream of the mold, giving an extruded foam plate having a cross-sectional shape with a thickness of 60 mm and a width of 1,000 mm. The foam plate was cut with a cutter into a thickness of 50 mm, a width of 910 mm, and a length of 1,820 mm.

(Examples B to H, Comparative Examples A to E, Reference Example A)

Foams were obtained by the same operation as in Example 1 except that the type and amount of the foaming agent, the type and amount of the flame retardant composition, the type and amount of the flame retardant auxiliary, the type and amount of the stabilizer, and the types and amounts of other components were changed as shown in Tables 2 and 3. The parts by weight of a styrenic resin in the parentheses with *[1] are numerical values including a styrenic resin contained in the flame retardant composition. The parts by weight of a flame retardant and a stabilizer in the parentheses with *[2] are converted values of a flame retardant or a stabilizer contained in the flame retardant composition where the amount of the styrenic resin is 100 parts by weight at the time of preparation of the extruded foam. The properties of the obtained foams are shown in Tables 2 and 3.

[Table 2]

| Examples, Comparative Examples, and Reference Example of extruded styrenic resin foam | | | – | Example A | Example B | Example C | Example D | Example E | Example F | Example G | Example H |
|---|---|---|---|---|---|---|---|---|---|---|---|
| Examples of flame retardant composition used | | | – | Example 1 | Example 2 | Example 3 | Example 4 | Example 1 | Example 1 | Example 1 | Example 1 |
| Production conditions | Styrenic resin | 680 | parts by weight | (100) *1 | ← | ← | ← | ← | ← | ← | ← |
| | Flame retardant | EMERALD INNOVATION 3000 | parts by weight | (3) *2 | ← | ← | ← | ← | (3) *2 | (5) *2 | (1) *2 |
| | Stabilizer | EP-13 | parts by weight | 0.15 | ← | ← | ← | ← | ← | ← | ← |
| | | ECN-1280 | parts by weight | (0.15) *2 | (0.25) *2 | (0.09) *2 | (0.15) *2 | ← | (0.15) *2 | (0.25) *2 | (0.05) *2 |
| | | Plenlizer ST-210 | parts by weight | 0.2 | ← | ← | (0.2) *2 | 0 | 0.2 | ← | ← |
| | | ANOX 20 | parts by weight | (0.3) *2 | ← | ← | ← | ← | (0.3) *2 | (0.5) *2 | (0.1) *2 |
| | | Ultranox 626 | parts by weight | (0.015) *2 | ← | ← | ← | ← | (0.015) *2 | (0.025) *2 | (0.005) *2 |
| | Flame retardant auxiliary | Poly-1,4-diisopropylbenzene | parts by weight | 0.1 | ← | ← | ← | ← | ← | ← | 0.2 |
| | | Triphenylphosphine oxide | parts by weight | 0 | ← | ← | ← | ← | 0.5 | 0 | ← |
| | Bubble regulating agent | Talc | parts by weight | 0.5 | ← | ← | ← | ← | ← | ← | ← |
| | Lubricant | Calcium stearate | parts by weight | 0.1 | ← | ← | ← | ← | ← | ← | ← |
| | Water-absorbing medium | Bentonite | parts by weight | 0.5 | ← | ← | ← | ← | ← | ← | 0.1 |
| | | Silica | parts by weight | 0.2 | ← | ← | ← | ← | ← | ← | 0 |
| | Foaming agent | Isobutane | parts by weight | 3.5 | ← | ← | ← | ← | ← | ← | ← |
| | | Butane for industrial use | parts by weight | 0 | ← | ← | ← | ← | ← | ← | 3.5 |
| | | Dimethyl ether | parts by weight | 2.0 | ← | ← | ← | ← | ← | ← | 3 |
| | | Water | parts by weight | 0.7 | ← | ← | ← | ← | ← | ← | 0.6 |
| Physical properties of extruded foam | Density | | kg/m$^3$ | 31 | 31 | 31 | 31 | 30 | 31 | 30 | 26 |
| | Combustibility | | – | ○ | ○ | ○ | ○ | ○ | ○ | ○ | ○ |
| | Oxygen index | | % | 26 | 25 | 27 | 26 | 27 | 28 | 29 | 29 |
| | Small bubble area ratio | | % | 40 | 40 | 25 | 40 | 30 | 35 | 30 | <5 |
| | Large bubble diameter | | mm | 0.4 | 0.4 | 0.45 | 0.4 | 0.4 | 0.45 | 0.5 | 0.5 |
| | Thermal conductivity | | W/mK | 0.026 | 0.026 | 0.027 | 0.026 | 0.027 | 0.027 | 0.028 | 0.032 |
| | Generation rate of foreign substance | | pass or failure | ○ | ○ | ○ | ○ | ○ | ○ | ○ | ○ |

[Table 3]

| Examples, Comparative Examples, and Reference Example of extruded styrenic resin foam | | | – | Comparative Example A | Comparative Example B | Comparative Example C | Comparative Example D | Comparative Example E | Reference Example A |
|---|---|---|---|---|---|---|---|---|---|
| Examples of flame retardant composition used | | | – | Comparative Example 1 | Comparative Example 2 | Comparative Example 3 | Comparative Example 4 | Comparative Example 1 | – |
| Production conditions | Styrenic resin | 680 | parts by weight | (100) *1 | ← | ← | ← | ← | 100 |
| | Flame retardant | EMERALD INNOVATION 3000 | parts by weight | (3) *2 | ← | ← | ← | ← | 3 |
| | Stabilizer | EP-13 | parts by weight | 0.15 | ← | ← | ← | 0.15 | 0.15 |
| | | ECN-1280 | parts by weight | (0.075) *2 | (0.075) *2 | (0.3) *2 | (0.15) *2 | 0.075+(0.075) *2 | 0.15 |
| | | Plenlizer ST-210 | parts by weight | 0.2 | ← | ← | ← | 0.2 | 0.2 |
| | | ANOX 20 | parts by weight | 0 | (0.3) *2 | (0.15) *2 | (0.3) *2 | 0.3 | 0.3 |
| | | Ultranox 626 | parts by weight | 0 | ← | (0.15) *2 | (0.15) *2 | 0.015 | 0.015 |
| | Flame retardant auxiliary | Poly-1,4-diisopropylbenzene | parts by weight | 0.1 | ← | ← | ← | ← | ← |
| | | Triphenylphosphine oxide | parts by weight | 0 | ← | ← | ← | ← | ← |
| | Bubble regulating agent | Talc | parts by weight | 0.5 | ← | ← | ← | ← | ← |
| | Lubricant | Calcium stearate | parts by weight | 0.1 | ← | ← | ← | ← | ← |
| | Water-absorbing medium | Bentonite | parts by weight | 0.5 | ← | ← | ← | ← | ← |
| | | Silica | parts by weight | 0.2 | ← | ← | ← | ← | ← |
| | Foaming agent | Isobutane | parts by weight | 3.5 | ← | ← | ← | ← | ← |
| | | Butane for industrial use | parts by weight | 0 | ← | ← | ← | ← | ← |
| | | Dimethyl ether | parts by weight | 2.0 | ← | ← | ← | ← | ← |
| | | Water | parts by weight | 0.7 | ← | ← | ← | ← | ← |
| Physical properties of extruded foam | Density | | kg/m$^3$ | 30 | 30 | 30 | 30 | 30 | 31 |
| | Combustibility | | – | ○ | ○ | × | ○ | ○ | ○ |
| | Oxygen index | | % | 29 | 29 | 24 | 26 | 26 | 26 |
| | Small bubble area ratio | | % | 10 | 15 | 40 | 30 | 15 | 40 |
| | Large bubble diameter | | mm | 0.6 | 0.55 | 0.35 | 0.45 | 0.5 | 0.45 |
| | Thermal conductivity | | W/mK | 0.031 | 0.031 | 0.026 | 0.028 | 0.029 | 0.027 |
| | Generation rate of foreign substance | | pass or failure | × | × | ○ | × | × | △ |

As apparent from the comparison of Examples 1 to 4 with Comparative Examples 1 to 4, flame retardant compositions having an excellent appearance can be stably obtained when a flame retardant composition includes a brominated styrene-butadiene polymer, a stabilizer, and a styrenic resin, the brominated styrene-butadiene polymer is contained in an amount of 30 to 80 wt% where the composition is 100 wt%, and the 5 wt% reduction temperature is 255 to 270°C.

As apparent from the comparison of Examples A to H with Comparative Examples A to E, extruded polystyrene foams having excellent thermal stability, excellent flame retardancy, and an excellent appearance can be obtained when the flame retardant compositions prepared in Examples 1 to 4 are added to the extruded polystyrene foams.

## Claims

**1.** A method for manufacturing an extruded polystyrene foam, the method comprising:

preparing a flame retardant composition comprising a brominated styrene-butadiene polymer, a stabilizer, and a styrenic resin excluding the brominated styrene-butadiene polymer,
the brominated styrene-butadiene polymer being contained in an amount of 30 to 80 wt% when the total weight of the flame retardant composition is 100 wt%,
the flame retardant composition having a TGA (thermogravimetric analysis) 5 wt% reduction temperature of 255 to 270°C,
wherein as the stabilizer in the flame retardant composition, at least two stabilizers selected from the group consisting of epoxy compounds, phenolic stabilizers, polyhydric alcohol partial esters, and hindered amine stabilizers are contained; and
performing extrusion-foaming with the flame retardant composition, a styrenic resin, and a foaming agent.

**2.** The method according to claim 1, wherein the flame retardant composition is contained in such an amount that the brominated styrene-butadiene polymer is contained in an amount of 0.5 to 6 parts by weight relative to 100 parts by weight of the total amount of the styrenic resins.

**3.** The method according to any one of claim 1 or 2, wherein a radical generator is contained in an amount of 0.05 to 0.5 parts by weight relative to 100 parts by weight of the total amount of the styrenic resins.

**4.** The method according to claim 3, wherein the radical generator is at least one compound selected from the group consisting of 2,3-dimethyl-2,3-diphenylbutane and poly-1,4-diisopropylbenzene.

**5.** The method according to any one of claims 1 to 4, wherein at least one compound selected from the group consisting of phosphoric acid ester and phosphine oxide is contained.

**6.** The method according to claim 5, wherein the phosphoric acid ester is at least one compound selected from the group consisting of triphenyl phosphate and tris(tribromoneopentyl) phosphate, and the phosphine oxide is triphenylphosphine oxide.

**7.** The method according to any one of claims 1 to 6, wherein the foaming agent contains at least one compound selected from saturated hydrocarbons having 3 to 5 carbon atoms.

**8.** The method according to claim 7, wherein the foaming agent further contains at least one substance selected from the group consisting of water, carbon dioxide, nitrogen, alcohols having 1 to 4 carbon atoms, dimethyl ether, methyl chloride, and ethyl chloride.

**9.** An extruded polystyrene foam obtainable by the method according to any one of claims 1 to 8.

## Patentansprüche

**1.** Ein Verfahren zur Herstellung eines extrudierten Polystyrolschaums, wobei das Verfahren umfasst:

Herstellen einer flammenhemmenden Zusammensetzung, umfassend ein bromiertes Styrol-Butadien-Polymer, einen Stabilisator und ein Styrolharz ohne das bromierte Styrol-Butadien-Polymer,

wobei das bromierte Styrol-Butadien-Polymer in einer Menge von 30 bis 80 Gew.-% enthalten ist, wenn das Gesamtgewicht der flammenhemmenden Zusammensetzung 100 Gew.-% beträgt,
wobei die flammenhemmende Zusammensetzung eine TGA (thermogravimetrische Analyse) 5 Gew.-% Reduktionstemperatur von 255 bis 270°C aufweist,
wobei als Stabilisator in der flammenhemmenden Zusammensetzung mindestens zwei Stabilisatoren, die aus der Gruppe bestehend aus Epoxyverbindungen, phenolischen Stabilisatoren, mehrwertigen Alkoholpartialestern und gehinderten Aminstabilisatoren ausgewählt sind, enthalten sind; und
Durchführen von Extrusionsschäumung mit der flammenhemmenden Zusammensetzung, einem Styrolharz und einem Schäummittel.

2. Das Verfahren nach Anspruch 1, wobei die flammenhemmende Zusammensetzung in einer solchen Menge enthalten ist, dass das bromierte Styrol-Butadien-Polymer in einer Menge von 0,5 bis 6 Gewichtsteilen, bezogen auf 100 Gewichtsteile der Gesamtmenge des Styrolharzes, enthalten ist.

3. Das Verfahren nach einem der Ansprüche 1 oder 2, wobei ein Radikalbildner in einer Menge von 0,05 bis 0,5 Gewichtsteilen, bezogen auf 100 Gewichtsteile der Gesamtmenge des Styrolharzes, enthalten ist.

4. Das Verfahren nach Anspruch 3, wobei der Radikalbildner mindestens eine Verbindung ist, die aus der Gruppe bestehend aus 2,3-Dimethyl-2,3-diphenylbutan und Poly-1,4-diisopropylbenzol ausgewählt ist.

5. Das Verfahren nach einem der Ansprüche 1 bis 4, wobei mindestens eine Verbindung, die aus der Gruppe bestehend aus Phosphorsäureester und Phosphinoxid ausgewählt ist, enthalten ist.

6. Das Verfahren nach Anspruch 5, wobei der Phosphorsäureester mindestens eine Verbindung ist, die aus der Gruppe bestehend aus Triphenylphosphat und Tris(tribromneopentyl)phosphat ausgewählt ist und das Phosphinoxid Triphenylphosphinoxid ist.

7. Das Verfahren nach einem der Ansprüche 1 bis 6, wobei das Schäummittel mindestens eine Verbindung enthält, die aus der Gruppe bestehend aus gesättigten Kohlenwasserstoffen mit 3 bis 5 Kohlenstoffatomen ausgewählt ist.

8. Das Verfahren nach Anspruch 7, wobei das Schäummittel ferner mindestens eine Substanz enthält, die aus der Gruppe bestehend aus Wasser, Kohlenstoffdioxid, Stickstoff, Alkoholen mit 1 bis 4 Kohlenstoffatomen, Dimethylether, Methylchlorid und Ethylchlorid ausgewählt ist.

9. Ein extrudierter Polystyrolschaum, der durch das Verfahren nach einem der Ansprüche 1 bis 8 erhältlich ist.

## Revendications

1. Méthode de fabrication d’une mousse de polystyrène extrudé, la méthode comprenant :

la préparation d’une composition ignifugeante comprenant un polymère de styrène-butadiène bromé, un stabilisant, et une résine styrénique à l’exclusion du polymère de styrène-butadiène bromé,
le polymère de styrène-butadiène bromé étant contenu en une quantité de 30 à 80 % en poids quand le poids total de la composition ignifugeante est de 100 % en poids,
la composition ignifugeante ayant une température de réduction de 5 % en poids par TGA (analyse thermogravimétrique) de 255 à 270 °C,
dans laquelle, en tant que stabilisant dans la composition ignifugeante, au moins deux stabilisants choisis dans le groupe constitué par les composés époxy, les stabilisants phénoliques, les esters partiels d’alcool polyhydrique, et les stabilisants de type amine encombrée, sont contenus ; et
la mise en œuvre d’une opération d’extrusion-moussage avec la composition ignifugeante, une résine styrénique, et un agent moussant.

2. Méthode selon la revendication 1, dans laquelle la composition ignifugeante est contenue en une quantité telle que le polymère de styrène-butadiène bromé est contenu en une quantité de 0,5 à 6 parties en poids pour 100 parties en poids de la quantité totale des résines styréniques.

3. Méthode selon l’une quelconque des revendications 1 ou 2, dans laquelle un générateur radicalaire est contenu en

une quantité de 0,05 à 0,5 partie en poids pour 100 parties en poids de la quantité totale des résines styréniques.

**4.** Méthode selon la revendication 3, dans laquelle le générateur radicalaire est au moins un composé choisi dans le groupe constitué par le 2,3-diméthyl-2,3-diphénylbutane et le poly(1,4-diisopropylbenzène).

**5.** Méthode selon l'une quelconque des revendications 1 à 4, dans laquelle au moins un composé choisi dans le groupe constitué par un ester d'acide phosphorique et un oxyde de phosphine est contenu.

**6.** Méthode selon la revendication 5, dans laquelle l'ester d'acide phosphorique est au moins un composé choisi dans le groupe constitué par le phosphate de triphényle et le phosphate de tris(tribromonéopentyle), et l'oxyde de phosphine est l'oxyde de triphénylphosphine.

**7.** Méthode selon l'une quelconque des revendications 1 à 6, dans laquelle l'agent moussant contient au moins un composé choisi parmi les hydrocarbures saturés ayant 3 à 5 atomes de carbone.

**8.** Méthode selon la revendication 7, dans laquelle l'agent moussant contient en outre au moins une substance choisie dans le groupe constitué par l'eau, le dioxyde de carbone, l'azote, les alcools ayant 1 à 4 atomes de carbone, le diméthyléther, le chlorure de méthyle, et le chlorure d'éthyle.

**9.** Mousse de polystyrène extrudé susceptible d'être obtenue par la méthode de l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2007058736 A
- WO 2010080285 A
- WO 2014125933 A

### Non-patent literature cited in the description

- *CHEMICAL ABSTRACTS,* 1195978-93-8